# EUROPÄISCHE PATENTSCHRIFT

(11) **EP 2 222 481 B1**
(45) Veröffentlichungstag und Bekanntmachung des Hinweises auf die Patenterteilung: **30.05.2012**
(21) Anmeldenummer: 08862859.9
(22) Anmeldetag: 20.10.2008
(51) Int. Cl.: B60C 11/11, B60C 11/13, B60C 11/12

(54) **FAHRZEUGLUFTREIFEN**
PNEUMATIC VEHICLE TIRE
PNEUMATIQUE DE VÉHICULE

(30) Priorität: 17.12.2007 DE 102007061148
(43) Veröffentlichungstag der Anmeldung: 01.09.2010
(73) Patentinhaber: Continental Reifen Deutschland GmbH, 30165 Hannover (DE)
(72) Erfinder: DIENSTHUBER, Franz, 30559 Hannover (DE); SENG, Matthias, 30449 Hannover (DE); VENNEBÖRGER, Martin, 30625 Hannover (DE)
(74) Vertreter: Finger, Karsten
(86) Internationale Anmeldenummer: PCT/EP2008/064100
(87) Internationale Veröffentlichungsnummer: WO 2009/077231

(56) Entgegenhaltungen:
- EP-A- 0 775 600
- EP-A- 1 752 314
- EP-A- 1 798 067
- JP-A- 11 189 011
- JP-A- 2003 080 907

## Beschreibung

Die Erfindung betrifft einen Fahrzeugluftreifen, insbesondere für den Einsatz unter winterlichen Fahrbedingungen, mit einem laufrichtungsgebundenen Laufstreifen, welcher durch eine zentrale Umfangsnut, durch Quernuten und durch die Quernuten verbindende Umfangrillen in schulterseitig verlaufende Profilblöcke, der Umfangsnut beidseitig benachbart verlaufende Profilblöcke und mittlere Profilblöcke gegliedert ist, wobei die Quernuten, ausgehend von der zentralen Umfangsnut und über die Laufstreifenbreite betrachtet, eine gepfeilte Anordnung aufweisen, wobei die Umfangsrillen sich gegen die Abrollrichtung des Reifens kontinuierlich verbreitern, wobei in die die schulterseitigen Profilblöcke begrenzenden Umfangsrillen jeweils eine Zusatzrille einmündet, welche Zusatzrillen die schulterseitigen Profilblöcke teilen, parallel zu den schulterseitigen Quernutabschnitten verlaufen und schmäler sind als diese Quernutabschnitte.

Fahrzeugluftreifen mit laufrichtungsgebundenen Laufstreifen sind in unterschiedlichen Ausführungsvarianten bekannt und Gegenstand einer Vielzahl von Patenten und Patentanmeldungen.

Ein Reifen der eingangs genannten Art ist beispielsweise aus der EP-A-1 752 314 bekannt. Dieser Reifen weist somit einen Laufstreifen auf, welcher durch die Quernuten verbindende Umfangsrillen in Profilblöcke gegliedert ist. Diese Umfangsrillen verlaufen in Umfangsrichtung oder sind gegenüber der Umfangsrichtung gleichsinnig zu den Quernuten geneigt.

Aus der EP-A-0 485 883 ist ein Fahrzeugluftreifen bekannt, dessen laufrichtungsgebunden gestalteter Laufstreifen derart in Blöcke gegliedert ist, dass mittlere Blockreihen und Schulterblockreihen vorgesehen sind, welche voneinander durch breite Umfangsnuten getrennt sind. Der Laufstreifen weist insgesamt eine konventionelle Gliederung in Einzelblöcke und somit eine eher weiche, instabile Profilstruktur auf, die erfahrungsgemäß das Fahrverhalten beeinträchtigt, insbesondere was das Ansprechverhalten auf Lenkkräfte und die Geradeauslaufstabilität auf nassen und trockenen Fahrbahnen betrifft.

Ein weiterer PKW-Winterreifen mit einem laufrichtungsgebunden gestalteten Laufstreifen ist aus der AT-B-404 341 bekannt. Auch dieser Laufstreifen weist zwei Schulterblockreihen und zwei mittlere Blockreihen auf. In den beiden mittleren Blockreihen sind jeweils zwei in Umfangsrichtung benachbarte Blöcke an ihren der zentralen Umfangsnut benachbarten Bereichen paarweise miteinander verbunden. Dadurch wird zwar die Profilsteifigkeit im Mittelbereich des Laufstreifens erhöht, es entstehen jedoch Ungleichmäßigkeiten in der Profilstruktur, die strömungstechnisch nicht optimal sind.

Aus der EP-A-1 106 393 ist ein weiterer PKW-Winterreifen mit einem laufrichtungsgebundenen Laufstreifen offenbart. Der Laufstreifen ist durch Umfangsnuten und durch Quernuten in eine Schulterblockreihe und in zwei mittlere Blockreihen gegliedert, wobei sämtliche Blöcke in den beiden mittleren Blockreihen im Bereich der zentralen Umfangsnut in Umfangsrichtung aneinander gekoppelt sind und jeder dieser Blöcke durch eine zumindest im Wesentlichen in Umfangsrichtung verlaufende Teilungsnut in zwei ebenso große und ebenfalls aneinander gekoppelte Blockteile gegliedert ist. Durch die Ankopplung der Blöcke im Mittelbereich des Laufstreifen soll die Profilsteifigkeit zur Verbesserung der Fahreigenschaften erhöht werden. Die zentrale Umfangsnut und die Teilungsnuten sollen eine günstige Durchströmung des Profils bewirken und damit das Aquaplaningverhalten und den Nassgriff verbessern.

Bei der Gestaltung von Laufsteifen für PKW-Winterreifen wird meistens ein besonderes Augenmerk auf die Brems- und Traktionsperformance des Reifens auf eisigen und schneeigen Fahrbahnen gelegt. Dabei wird leicht übersehen, dass gerade im Winter das Wasserdränagevermögen des Laufstreifens auf oft nassen und matschigen Fahrbahnen von großer Bedeutung ist.

Der Erfindung liegt somit die Aufgabe zugrunde, bei einem Reifen der eingangs genannten Art vor Allem das Wasserableitvermögen zu optimieren ohne die Brems- und Traktionsperformance des Reifens auf winterlichen und auf trockenen Fahrbahnen zu beeinträchtigen.

Gelöst wird die gestellte Aufgabe erfindungsgemäß dadurch, dass die Umfangsrillen gegenüber der Umfangsrichtung gegensinnig zu den Quernuten geneigt verlaufen.

In erfindungsgemäß ausgeführten Laufstreifen erhöht sich auf nassen Fahrbahnen in den geneigten Umfangsrillen bei der Wasserdurchströmung der Druck mit breiter werdendem Querschnitt, das Wasser wird somit beschleunigt in die Quernuten abgeführt und im Bereich der schulterseitigen Profilblöcke durch die Zusatzrillen aus der Bodenaufstandsfläche heraus befördert. Erfindungsgemäß ausgeführte Laufstreifen weisen somit ein sehr gutes Wasserdränagevermögen auf.

Weitere Merkmale, Vorteile und Einzelheiten der Erfindung werden nun anhand der Zeichnung, die schematisch Ausführungsbeispiele darstellt, näher beschrieben. Dabei zeigen
Fig. 1 eine Draufsicht auf einen Abschnitt einer Abwicklung eines Laufstreifens eines Fahrzeugluftreifens mit einer Ausführungsvariante der Erfindung,
Fig. 2 eine Draufsicht auf einen Abschnitt einer Abwicklung eines Laufstreifens mit einer weiteren Ausführungsvariante der Erfindung,
Fig. 3 einen Schnitt entlang der Linie III-III der Fig. 1 und der Fig. 2,
Fig. 4 einen Schnitt entlang der Linie IV-IV der Fig. 1 und der Fig. 2,
Fig. 5 einen Schnitt entlang der Linie V-V der Fig. 2,
Fig. 6 einen Schnitt entlang der Linie VI-VI der Fig. 2 und
Fig. 7 einen Schnitt entlang der Linie VII-VII der Fig. 2.

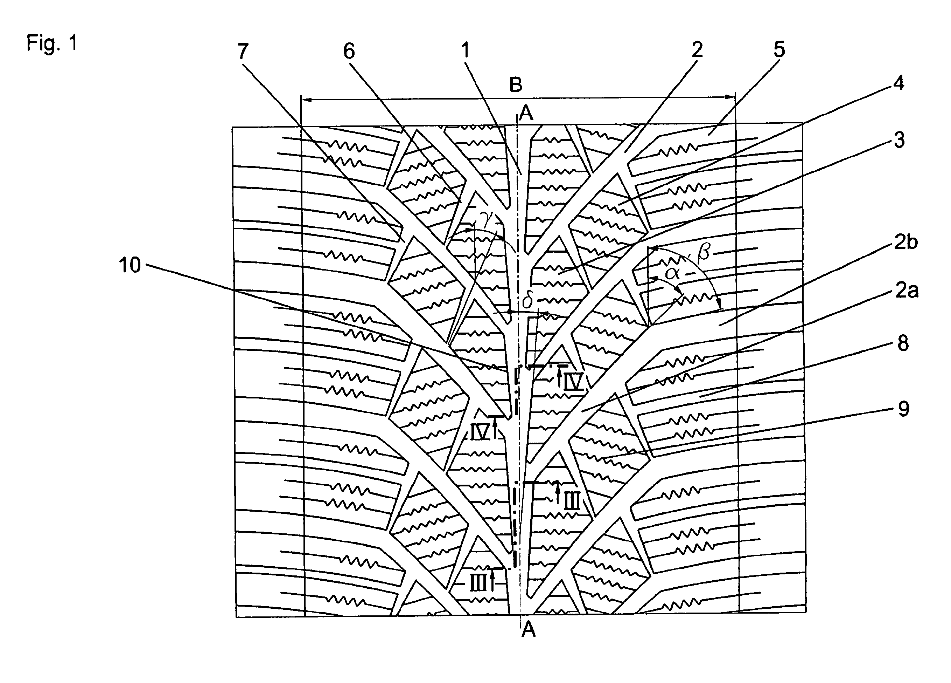

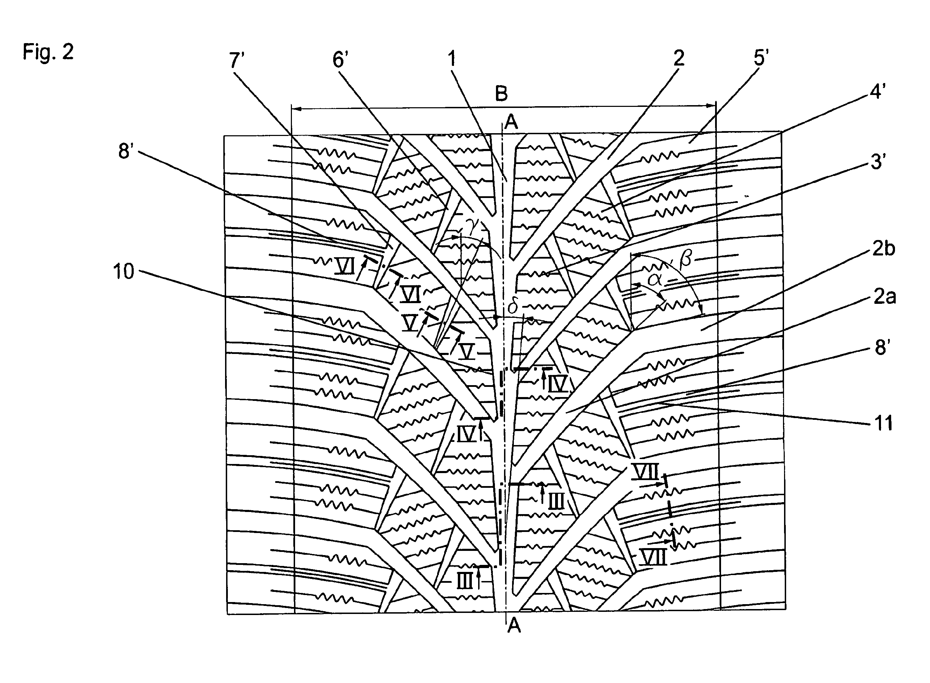

In Fig. 1 und Fig. 2 bezeichnet A-A den Reifenäquator und B die Breite des bodenberührenden Teils des Laufstreifens. Die dargestellten Laufstreifen sind für Fahrzeugluftreifen für Personenkraftwagen vorgesehen und für einen Einsatz unter winterlichen Fahrbedingungen besonders gut geeignet.

Die beiden in Fig. 1 und Fig. 2 gezeigten Laufstreifen weisen gleiche Grundstrukturen auf, sind laufrichtungsgebunden ausgeführt und mit in beiden Laufstreifenhälften übereinstimmend ausgeführten Profilelementen versehen. Die Profilstrukturen in der einen Laufstreifenhälfte sind gegenüber jenen in der anderen Laufstreifenhälfte in Umfangsrichtung in der Größenordnung einer halben Pitchlänge versetzt. Entlang des Reifenäquators A-A verläuft eine zentrale Umfangsnut 1, von welcher sich in Richtung der beiden Laufstreifenränder Quernuten 2 erstrecken, welche Profilblöcke 3, 4 und 5 (Fig. 1) und Profilblöcke 3', 4' und 5' (Fig. 2) begrenzen. Die Quernuten 2 in der einen Laufstreifenhälfte sind gegenüber jenen in der anderen Laufstreifenhälfte gegensinnig geneigt, sodass sich eine gepfeilte Anordnung der Quernuten 2 über die Laufstreifenbreite B ergibt. Die Montage von Reifen mit erfindungsgemäß ausgeführten Laufstreifen am Fahrzeug erfolgt derart, dass beim Abrollen des Reifens die in die Umfangsnut 1 mündenden Enden der Quernuten 2 vor den weiteren Quernutabschnitten in den Untergrund einlaufen. Die Breite der Quernuten 2 wird von ihren laufstreifeninnenseitigen Enden bis zu ihren laufstreifenaußenseitigen Enden größer. Die Quernuten 2 setzen sich ferner aus zwei Abschnitten 2a, 2b zusammen, wobei jeweils der an die Umfangsnut 1 anschließende Quernutabschnitt 2a mit der Umfangsrichtung (Reifenäquator A-A) einen Winkel α einschließt, welcher in der Größenordnung von 30° bis 60°, insbesondere etwa 45°, beträgt. Der zweite Quernutabschnitt 2b, welche über die seitlichen Ränder der Bodenaufstandsfläche hinaus verläuft, ist unter einem Winkel β zur Umfangsrichtung (Reifenäquator A-A) orientiert, welcher zwischen 70° und 90° gewählt wird.

Die zwischen den in Umfangsrichtung benachbarten Quernuten 2 angeordneten Profilblöcke 3, 4 und 5 (Fig. 1) und 3', 4' und 5' (Fig. 2) sind durch gerade verlaufende Umfangsrillen 6, 7 (Fig. 1) bzw. 6', 7' (Fig. 2) voneinander getrennt. Die Rillen 6 bzw. 6' trennen die der Umfangsnut 1 benachbart verlaufenden Profilblöcke 3 bzw. 3' von den mittleren Profilblöcken 4, 4', die Rillen 7, 7' trennen die mittleren Profilblöcke 4, 4' von den schulterseitig angeordneten Profilblöcken 5, 5'. Die in der einen Laufstreifenhälfte verlaufenden Rillen 6, 7 bzw. 6', 7' sind zu jenen, die in der anderen Laufstreifenhälfte verlaufen, gegensinnig geneigt, wobei ihre Neigung gleichzeitig auch gegensinnig zur Neigung der Quernuten 2 ist. Der Neigungswinkel γ der Rillen 6, 7 bzw. 6', 7' relativ zur Umfangsrichtung ist kleiner als 45° und wird insbesondere zwischen 10° und 35° gewählt. Die Umfangsrillen 6, 7 bzw. 6', 7' verbreitern sich gegen die vorgesehene Abrollrichtung (Pfeile R) des Reifens jeweils kontinuierlich über ihren Verlauf zwischen zwei benachbarten Quernuten 2. Die schmalen Enden der Umfangsrillen 6, 7 bzw. 6', 7' weisen eine Breite zwischen 1 mm und 2 mm, die breiten Enden eine Breite zwischen 3 mm und 5 mm auf.

Die schulterseitig angeordneten Profilblöcke 5, 5' sind in ihrem mittleren Bereich durch mit konstanter Breite ausgeführte Zusatzrillen 8, 8' zweigeteilt, welche parallel zu den Quernutabschnitten 2b verlaufen und in die Rillen 7, 7' einmünden.

Sämtliche Profilblöcke 3, 4, 5 bzw. 3', 4', 5' sind jeweils mit einer Anzahl von Einschnitten 9 versehen. Bei den dargestellten Ausführungsvarianten sind die Einschnitte 9 großteils zumindest abschnittsweise wellen- bzw. zickzackförmig verlaufend ausgeführt. Innerhalb der Profilblöcke 3, 4, 5 bzw. 3', 4', 5' verlaufen die Einschnitte 9 jeweils parallel zueinander und sind zumindest im Wesentlichen in Querrichtung des Laufstreifens orientiert.

Die entlang des Reifenäquators A-A verlaufende Umfangsnut 1 ist von Blockflanken 10 der Profilblöcke 3, 3' begrenzt, deren an der Oberfläche des Laufstreifens befindliche Kanten mit der Umfangsrichtung (Reifenäquator A-A) einen Winkel δ einschließen, welcher zwischen 2° und 7° gewählt wird. Dadurch setzt sich die Umfangsnut 1 aus sich etwa keilförmig verbreiternden Umfangsnutabschnitten zusammen, wobei beim Abrollen des Reifens die schmalen Enden der Abschnitte zuerst in die Kontaktfläche mit dem Untergrund eintreten.

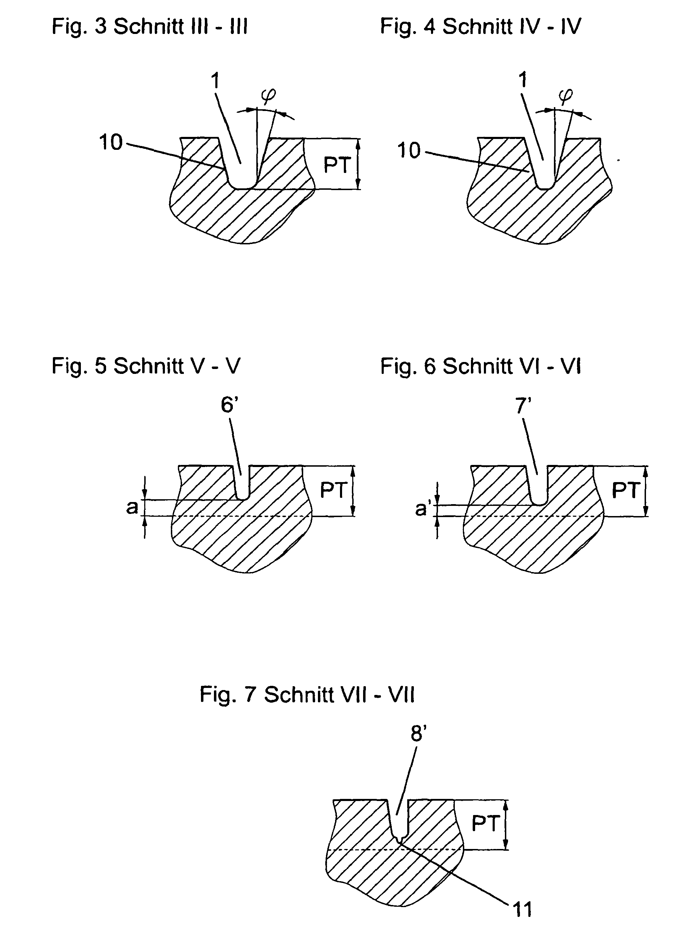

Wie die Schnittdarstellungen in Fig. 3 und Fig. 4 zeigen, ändert sich die Neigung der Blockflanken 10 zur radialen Richtung über ihren Verlauf in Umfangsrichtung. An den Stellen, an welchen die keilartigen Umfangsnutabschnitte am schmalsten sind, schließt jede Blockflanke 10 mit der radialen Richtung einen kleineren Winkel ϕ ein als an den breitesten Stellen dieser Umfangsnutabschnitte. Im Bereich dazwischen ändert sich der Winkel ϕ kontinuierlich von einer Größe zwischen 0° und 5° an der schmalsten bis zu 15° an der breitesten Stelle.

Bei der in Fig. 1 gezeigten Ausführungsvariante weisen die Umfangsnut 1, die Quernuten 2, die Umfangsrillen 6, 7 sowie die Zusatzrillen 8 zumindest großteils übereinstimmende Tiefen auf, die der gewählten Profiltiefe PT entsprechen.

Bei der in Fig. 2 gezeigten Ausführungsvariante betragen die Tiefe der Umfangsnut 1 und die Tiefe der Quernuten 2 der vorgesehenen Profiltiefe PT, die Tiefe der Umfangsrillen 6', 7' sowie jene der Zusatzrillen 8' ist geringer als die Profiltiefe PT. Die zwischen benachbarten Quernuten 2 befindlichen Profilblöcke 3', 4' und 5' befinden sich quasi auf angehobenen "Bodenplatten", welche den Laufstreifen vorrangig in Querrichtung, aber auch in Umfangsrichtung versteifen. Wie die Schnittdarstellungen in Fig. 5, 6 und 7 zeigen, stimmt die Tiefe der Zusatzrillen 8' mit der Tiefe der Rillen 7', in welche die Zusatzrillen 8' einmünden, überein, wobei die Anhebung a' gegenüber der Profiltiefe PT zwischen 2 mm und 3 mm gewählt wird. Die Rillen 6' sind gegenüber der Profiltiefe PT um 2,5 mm bis 3,5 mm angehoben (Abstand a in Fig. 5).

Bei der in Fig. 2 gezeigten Ausführungsvariante können die Zusatzrillen 8' mittig mit einem schmalen, etwa 0,4 mm bis 0,6 mm breiten Einschnitt 11 versehen werden, welcher sich bevorzugt über die gesamte Länge der Zusatzrille 8' erstreckt und eine Tiefe von 1 mm bis 3 mm aufweist. Die Einschnitte 11 gleichen die höhere Umfangssteifigkeit des Laufstreifens in den schulterseitigen Profilblöcken 5' aus.

Die sich keilartig erweiternden Rillen 6, 7 bzw. 6', 7' sowie die Zusatzrillen 8, 8' sind für das Wasserableitvermögen des Laufstreifens besonders vorteilhaft, da sich bei einer Wasserdurchströmung der Druck in den Rillen 6, 7 bzw. 6', 7' mit breiter werdendem Querschnitt erhöht und derart das Wasser über die Zusatzrillen 8, 8' besonders effektiv aus der Bodenaufstandsfläche des Reifens hinaus befördert wird.

Die Erfindung ist auf die dargestellten und beschriebenen Ausführungsvarianten nicht eingeschränkt. Die Umfangsrillen 6, 7 bzw. 6', 7' können beispielsweise einen leicht gekrümmten Verlauf aufweisen.

### Bezugszeichenliste

- A-A ....: Reifenäquator
- B ........: Laufstreifenbreite
- 1.........: Umfangsnut
- 2.........: Quernuten
- 2a .......: Quemutabschnitt
- 2b.......: Quemutabschnitt
- 3.........: Profilblock
- 3' .......: Profilblock
- 4.........: Profilblock
- 4' .......: Profilblock
- 5.........: Profilblock
- 5' .......: Profilblock
- 5a .......: Profilblock
- 5'a ......: Profilblock
- 6.........: Umfangsrillen
- 6' .......: Umfangsrillen
- 7.........: Umfangsrillen
- 7' .......: Umfangsrillen
- 8 .........: Zusatzrille
- 8' .......: Zusatzrille
- 9.........: Einschnitt
- 10 .......: Blockflanke
- 11.......: Einschnitt
- α.........: Winkel
- β.........: Winkel
- γ.........: Winkel
- δ.........: Winkel
- ϕ ........: Winkel
- PT ......: Profiltiefe
- a' ........: Tiefe der Zusatzrille 8' und der Rille 7'
- a .........: Tiefe der Rille 6'

## Patentansprüche

1. Fahrzeugluftreifen, insbesondere für den Einsatz unter winterlichen Fahrbedingungen, mit einem laufrichtungsgebundenen Laufstreifen, welcher durch eine zentrale Umfangsnut (1), durch Quernuten (2) und durch die Quernuten (2) verbindende Umfangrillen (6, 7, 6', 7') in schulterseitig verlaufende Profilblöcke (5, 5'), der Umfangsnut (1) beidseitig benachbart verlaufende Profilblöcke (3, 3') und mittlere Profilblöcke (4, 4') gegliedert ist, wobei die Quernuten (2), ausgehend von der zentralen Umfangsnut (1) und über die Laufstreifenbreite (B) betrachtet, eine gepfeilte Anordnung aufweisen, wobei die Umfangsrillen (6, 7, 6', 7') sich gegen die Abrollrichtung des Reifens kontinuierlich verbreitern, wobei in die die schulterseitigen Profilblöcke (5, 5') begrenzenden Umfangsrillen (7, 7') jeweils eine Zusatzrille (8, 8') einmündet, welche Zusatzrillen (8, 8') die schulterseitigen Profilblöcke (5, 5') teilen, parallel zu den schulterseitigen Quernutabschnitten (2b) verlaufen und schmäler sind als diese Quernutabschnitte (2b),
**dadurch gekennzeichnet,**
**dass** die Umfangsrillen (6, 7, 6', 7') gegenüber der Umfangsrichtung gegensinnig zu den Quernuten (2) geneigt verlaufen.

2. Fahrzeugluftreifen nach Anspruch 1, **dadurch gekennzeichnet, dass** die Umfangsrillen (6, 7, 6', 7') gegenüber der Umfangsrichtung unter einem Winkel (γ) verlaufen, welcher zwischen 15° und 35° beträgt.

3. Fahrzeugluftreifen nach Anspruch 1 oder 2, **dadurch gekennzeichnet, dass** sich die Breite der Umfangsrillen (6, 7, 6', 7') von einer Breite von 1 mm bis 2 mm an der schmalsten Stelle bis auf eine Breite von 3 mm bis 5 mm an der breitesten Stelle vergrößert.

4. Fahrzeugluftreifen nach Anspruch 1, **dadurch gekennzeichnet, dass** die Zusatzrillen (8, 8') eine im Wesentlichen konstante Breite von 3 mm bis 4 mm aufweisen.

5. Fahrzeugluftreifen nach Anspruch 1, **dadurch gekennzeichnet, dass** sich die Umfangsnut (1) aus keilartig breiter werdenden Umfangsnutabschnitten zusammensetzt, die derart angeordnet sind, dass beim Abrollen des Reifens die schmalen Enden der Abschnitte zuerst in den Untergrund eintreten.

6. Fahrzeugluftreifen nach Anspruch 1 oder 5, **dadurch gekennzeichnet, dass** die die keilartigen Umfangsnutabschnitte begrenzenden Blockflanken (10) mit der radialen Richtung einen sich in Umfangsrichtung kontinuierlich ändernden Winkel (ϕ) einschließen, wobei der Winkel (ϕ) an der schmalsten Stelle der Umfangsabschnitte am kleinsten ist.

7. Fahrzeugluftreifen nach Anspruch 6, **dadurch gekennzeichnet, dass** sich der Winkel (ϕ) der Blockflanken (10) von einer Größe zwischen 0° und 5° auf bis zu 15° vergrößert.

8. Fahrzeugluftreifen nach einem der Ansprüche 1 bis 7, **dadurch gekennzeichnet, dass** die zentrale Umfangsnut (1), die Umfangsrillen (6, 7), die Quernuten (2) und die Zusatzrillen (8) zumindest großteils übereinstimmende Tiefen aufweisen.

9. Fahrzeugluftreifen nach einem der Ansprüche 1 bis 7, **dadurch gekennzeichnet, dass** die Umfangsrillen (6', 7') und die Zusatzrillen (8') eine Tiefe aufweisen, die geringer ist als die Tiefe der zentralen Umfangsnut (1) und der Quernuten (2).

10. Fahrzeugluftreifen nach einem der Ansprüche 1 bis 7 oder 9, **dadurch gekennzeichnet, dass** die Tiefen der Zusatzrillen (8') und der Umfangsrillen (7'), in welche die Zusatzrillen (8') einmünden, größer sind als die Tiefe der weiteren Umfangsrillen (6').

11. Fahrzeugluftreifen nach Anspruch 9 oder 10, **dadurch gekennzeichnet, dass** die Zusatzrillen (8') und die Umfangsrillen (7'), in welche die Zusatzrillen (8') einmünden, gegenüber der Profiltiefe (PT) um 2 mm bis 3 mm angehoben sind.

12. Fahrzeugluftreifen nach Anspruch 9 oder 10, **dadurch gekennzeichnet, dass** die weiteren Umfangsrillen (7') gegenüber der Profiltiefe (PT) um 2,5 mm bis 3,5 mm angehoben sind.

13. Fahrzeugluftreifen nach einem der Ansprüche 9 bis 11, **dadurch gekennzeichnet, dass** die Zusatzrillen (8') jeweils mittig mit einem über ihre gesamte Erstreckung verlaufenden Einschnitt (11) versehen sind, welcher eine Tiefe von 1 mm bis 3 mm aufweist.

## Claims

1. Pneumatic vehicle tyre, in particular for use under winter driving conditions, having a running-direction-bound tread which is divided by a central circumferential groove (1), by lateral grooves (2) and by circumferential channels (6, 7, 6', 7') which connect the lateral grooves (2), into profile blocks (5, 5') which run on the shoulder side, the profile blocks (3, 3') which run adjacent on each side of the circumferential groove (1) and central profile blocks (4, 4'), wherein the lateral grooves (2) have an arrow-shaped arrangement starting from the central circumferential groove (1) viewed over the tread width (B), wherein the circumferential channels (6, 7, 6', 7') widen continuously counter to the rolling direction of the tyre, wherein an additional channel (8, 8') opens into each of the circumferential channels (7,7') which bound the shoulder-side profile blocks (5, 5'), which additional channels (8, 8') divide the shoulder-side profile blocks (5, 5'), run parallel to the shoulder-side lateral groove sections (2b) and are narrower than these lateral groove sections (2b),
**characterized**
**in that** the circumferential channels (6, 7, 6', 7') run at an incline with respect to the circumferential direction, in the opposite direction to the lateral grooves (2).

2. Pneumatic vehicle tyre according to Claim 1, **characterized in that** the circumferential channels (6, 7, 6', 7') run with respect to the circumferential direction at an angle (γ) which is between 15° and 35°.

3. Pneumatic vehicle tyre according to Claim 1 or 2, **characterized in that** the width of the circumferential channels (6, 7, 6', 7') increases from a width of 1 mm to 2 mm at the narrowest point up to a width of 3 mm to 5 mm at the widest point.

4. Pneumatic vehicle tyre according to Claim 1, **characterized in that** the additional channels (8, 8') have an essentially constant width of 3 mm to 4 mm.

5. Pneumatic vehicle tyre according to Claim 1, **characterized in that** the circumferential groove (1) is composed of circumferential groove sections which widen in the manner of a wedge and which are arranged in such a way that when the tyre rolls the narrow ends of the sections enter the underlying surface first.

6. Pneumatic vehicle tyre according to Claim 1 or 5, **characterized in that** the block edges (10) which bound the wedge-like circumferential groove sections enclose with the radial direction an angle (ϕ) which changes continuously in the circumferential direction, wherein the angle (ϕ) is smallest at the narrowest point of the circumferential sections.

7. Pneumatic vehicle tyre according to Claim 6, **characterized in that** the angle (ϕ) of the block edges (10) increases from a size between 0° and 5° to 15°.

8. Pneumatic vehicle tyre according to one of Claims 1 to 7, **characterized in that** the central circumferential groove (1), the circumferential channels (6, 7), the lateral grooves (2) and the additional channels (8) have at least for the most part corresponding depths.

9. Pneumatic vehicle tyre according to one of Claims 1 to 7, **characterized in that** the circumferential channels (6', 7') and the additional channels (8') have a depth which is less than the depth of the central circumferential groove (1) and the lateral grooves (2).

10. Pneumatic vehicle tyre according to one of Claims 1 to 7 or 9, **characterized in that** the depths of the additional channels (8') and of the circumferential channels (7') into which the additional channels (8') open are greater than the depth of the other circumferential channels (6').

11. Pneumatic vehicle tyre according to Claim 9 or 10, **characterized in that** the additional channels (8') and the circumferential channels (7') into which the additional channels (8') open are raised by 2 mm to 3 mm with respect to the profile depth (PT).

12. Pneumatic vehicle tyre according to Claim 9 or 10, **characterized in that** the other circumferential channels (7') are raised by 2.5 mm to 3.5 mm with respect to the profile depth (PT).

13. Pneumatic vehicle tyre according to one of Claims 9 to 11, **characterized in that** the additional channels (8') are each provided in the centre with an indent (11) which runs over its entire extent and which has a depth of 1 mm to 3 mm.

## Revendications

1. Bandage pneumatique pour roue de véhicule, en particulier destiné à être utilisé dans des conditions de roulage hivernal, présentant une bande de roulement asymétrique dans la direction d'avancement composée
d'une rainure périphérique centrale (1), de rainures transversales (2) et de sillons périphériques (6, 7, 6', 7') qui relient les rainures transversales (2) dans des blocs profilés (5, 5') qui s'étendent du côté des épaulements,
de blocs profilés (3, 3') voisins de chaque côté de la rainure périphérique (1) et
de blocs profilés médians (4, 4'),
les rainures transversales (2) étant agencées en flèches partant de la rainure périphérique centrale (1) sur la largeur (B) de la bande de roulement,
les sillons périphériques (6, 7, 6', 7') s'élargissant progressivement dans la direction opposée à la direction de roulement du bandage de roue,
un sillon supplémentaire (8, 8') débouchant dans chaque sillon périphérique (7, 7') qui délimite les blocs profilés (5, 5') situés du côté des épaulements,
ces sillons supplémentaires (8, 8') divisant les blocs profilés (5, 5') situés du côté des épaulements, s'étendant parallèlement aux parties (2b) des rainures transversales situées du côté des épaulements et étant plus étroits que ces parties (2b) des rainures transversales,
**caractérisé en ce que**
les sillons périphériques (6, 7, 6', 7') sont inclinés par rapport à la direction périphérique dans un sens opposé aux rainures transversales (2).

2. Bandage pneumatique pour roue de véhicule selon la revendication 1, **caractérisé en ce que** les sillons périphériques (6, 7, 6', 7') forment avec la direction périphérique un angle (γ) compris entre 15° et 35°.

3. Bandage pneumatique pour roue de véhicule selon les revendications 1 ou 2, **caractérisé en ce que** la largeur des sillons périphériques (6, 7, 6', 7') s'agrandit d'une largeur de 1 mm à 2 mm en leur emplacement le plus étroit à une largeur de 3 mm à 5 mm en leur emplacement le plus large.

4. Bandage pneumatique pour roue de véhicule selon la revendication 1, **caractérisé en ce que** les sillons supplémentaires (8, 8') ont une largeur essentiellement constante de 3 mm à 4 mm.

5. Bandage pneumatique pour roue de véhicule selon la revendication 1, **caractérisé en ce que** la rainure périphérique (1) est constituée de l'assemblage de parties de rainure périphérique qui s'élargissent en biseau et qui sont disposées de telle sorte que lorsque le bandage de roue roule, les extrémités étroites des parties entrent en premier en contact avec le sol.

6. Bandage pneumatique pour roue de véhicule selon les revendications 1 ou 5, **caractérisé en ce que** les flancs de bloc (10) qui délimitent les parties en biseau de la rainure périphérique forment avec la direction radiale un angle (ϕ) qui varie progressivement dans la direction périphérique, l'angle (ϕ) étant le plus petit à l'emplacement le plus étroit des parties périphériques.

7. Bandage pneumatique pour roue de véhicule selon la revendication 6, **caractérisé en ce que** l'angle (ϕ) des flancs de blocs (10) augmente d'une valeur comprise entre 0° et 5° jusqu'à 15°.

8. Bandage pneumatique pour roue de véhicule selon l'une des revendications 1 à 7, **caractérisé en ce que** la rainure périphérique centrale (1), les sillons périphériques (6, 7), les rainures transversales (2) et les sillons supplémentaires (8) ont des profondeurs qui se correspondent dans au moins leur plus grande partie.

9. Bandage pneumatique pour roue de véhicule selon l'une des revendications 1 à 7, **caractérisé en ce que** les sillons périphériques (6', 7') et les sillons supplémentaires (8') ont une profondeur inférieure à la profondeur de la rainure périphérique centrale (1) et des rainures transversales (2).

10. Bandage pneumatique pour roue de véhicule selon l'une des revendications 1 à 7 ou 9, **caractérisé en ce que** la profondeur des sillons supplémentaires (8') et des sillons périphériques (7') dans lesquels les sillons supplémentaires (8') débouchent est supérieure à la profondeur des autres sillons périphériques (6').

11. Bandage pneumatique pour roue de véhicule selon les revendications 9 ou 10, **caractérisé en ce que** les sillons supplémentaires (8') et les sillons périphériques (7') dans lesquels les sillons supplémentaires (8') débouchent sont rehaussés de 2 mm à 3 mm par rapport à la profondeur (PT) du profilé.

12. Bandage pneumatique pour roue de véhicule selon les revendications 9 ou 10, **caractérisé en ce que** les autres sillons périphériques (7') sont rehaussés de 2,5 mm à 3,5 mm par rapport à la profondeur (PT) du profilé.

13. Bandage pneumatique pour roue de véhicule selon l'une des revendications 9 à 11, **caractérisé en ce que** les sillons supplémentaires (8') sont tous dotés en leur milieu d'une entaille (11) qui s'étend sur toute leur extension et dont la profondeur est comprise entre 1 mm et 3 mm.
